# NOUVEAU FASCICULE DE BREVET EUROPEEN

(11) **EP 1 590 961 B2**
(45) Date de publication et mention de la décision concernant l'opposition: **01.10.2014**
(45) Mention de la délivrance du brevet: 12.10.2011
(21) Numéro de dépôt: 04707962.9
(22) Date de dépôt: 04.02.2004
(51) Int. Cl.: H04N 5/913, H04N 7/16, H04N 21/2347, H04N 21/418, H04N 21/432, H04N 21/433, H04N 21/4405, H04N 21/472, H04N 21/61, H04N 21/845, H04N 7/167

(54) **PROCEDE ET DISPOSITIF DE PROTECTION POUR LA DIFFUSION SECURISEE D'OEUVRES AUDIOVISUELLES**
SCHUTZ-VERFAHREN UND SCHUTZ-VORRICHTUNG ZUR SICHEREN VERTEILUNG VON AUDIOVISUELLEN WERKEN
PROTECTION METHOD AND DEVICE FOR THE SECURE DISTRIBUTION OF AUDIO-VISUAL WORKS

(30) Priorité: 04.02.2003 FR 0301271
(43) Date de publication de la demande: 02.11.2005
(73) Titulaire: NAGRA FRANCE SAS, 75015 Paris (FR)
(72) Inventeur: LECOMTE, Daniel, F-75116 PARIS (FR); GEORGES, Sébastien, F-75005 PARIS (FR)
(74) Mandataire: Leman Consulting S.A.
(86) Numéro de dépôt international: PCT/FR2004/050044
(87) Numéro de publication internationale: WO 2004/073291

(56) Documents cités:
- EP-A- 0 633 703
- EP-A- 0 993 142
- WO-A-01/69354
- FR-A- 2 789 780
- FR-A- 2 812 147
- US-A1- 2001 028 725
- US-A1- 2002 018 565

## Description

La présente invention concerne le traitement, la diffusion, l'enregistrement et la visualisation sécurisée de données vidéos et de programmes de télévision, ou plus généralement n'importe quel programme ou séquence multimédia utilisant un format de flux nominal de type MPEG, par des utilisateurs autorisés et propose un système sécurisé pour le traitement, la diffusion, la livraison, l'enregistrement, la copie privée et la visualisation de programmes et de séquences vidéo ou multimédia interactifs.

Le problème général est de fournir un dispositif capable de transmettre de façon sécurisée un ensemble de films de haute qualité visuelle à un format de type MPEG en direct vers un écran de télévision et/ou pour être enregistré sur le disque dur d'un boîtier reliant le réseau de télétransmission à l'écran de télévision, tout en préservant la qualité audiovisuelle mais en évitant toute utilisation frauduleuse comme la possibilité de faire des copies pirates de films ou de programmes audiovisuels enregistrés sur le disque dur du boîtier décodeur.

La présente invention se propose donc de fournir un système permettant de brouiller visuellement et recomposer un contenu vidéo numérique. L'invention permet également un contrôle total de l'utilisation des copies et des droits des oeuvres diffusées.

Avec les solutions actuelles, il est possible de transmettre des films et des programmes audiovisuels sous forme numérique via des réseaux de diffusion de type hertzien, câble, satellite, etc. ou via des réseaux de télécommunication type DSL (Digital Subscriber Line) ou BLR (boucle locale radio) ou via des réseaux DAB (Digital Audio Broadcasting). Par ailleurs, pour éviter le piratage des oeuvres ainsi diffusées, ces dernières sont souvent cryptées par divers moyens bien connus de l'homme de l'art.

Toutefois, l'inconvénient principal de toutes les solutions actuelles (TiVo Inc., WO00165762) est qu'il faut transmettre non seulement les données cryptées vers les utilisateurs, mais également les clés de décryptage. La transmission des clés de décryptage pouvant se faire avant, en même temps ou après la transmission des programmes audiovisuels. Pour augmenter la sécurité et donc la protection des oeuvres audiovisuelles contre une utilisation mal intentionnée, les clés de décryptage ainsi que les fonctions de décryptage des décodeurs audiovisuels peuvent comporter des moyens de sécurité améliorés comme des cartes à puces ou autres clés physiques qui peuvent en option, être mises à jour à distance.

Ainsi, les solutions actuelles appliquées à un boîtier décodeur avec possibilité d'enregistrement local de programmes audiovisuels sous forme numérique sur un support quelconque de type disque dur ou autre type de mémoire, offrent à un usager mal intentionné, la possibilité de faire des copies non autorisées des programmes ainsi enregistrés, puisqu'à un moment donné, cet usager possède avec son boîtier décodeur numérique, associé ou pas à des systèmes de cartes à puce, toutes les informations, programmes logiciels et données permettant le décryptage complet des programmes audiovisuels. En raison justement du fait qu'il possède toutes les données, l'usager mal intentionné aura la possibilité de faire des copies illégales sans que personne ne s'aperçoive de cette copie frauduleuse au moment où elle est faite.

Une solution consisterait donc à transmettre tout ou partie d'un programme audiovisuel numérique uniquement à la demande (services de vidéo à la demande) à travers un réseau de télécommunication large bande de type fibre optique, ADSL, câble ou satellite, sans autoriser l'enregistrement local des programmes audiovisuels. Ici, l'inconvénient est tout autre et provient des performances de ces réseaux qui ne permettent pas de garantir des flux continus de quelques mégabits par seconde à chaque usager, comme exigé par les flux MPEG qui nécessitent des bandes passantes de quelques centaines de kilobits à plusieurs mégabits par seconde.

Dans ces conditions, une solution consiste à séparer le flux en deux parties dont aucune ne serait utilisable seule. Dans cette optique plusieurs brevets ont été déposés. Ainsi, on connaît par le document EP0778513 (Matsushita) un procédé permettant de prévenir l'utilisation illégale d'une information en y ajoutant une information de contrôle afin de vérifier les droits de l'utilisateur.

Le système permet de savoir en permanence quelle partie de l'information est utilisée et par quel utilisateur et par là de savoir si cet utilisateur est en position illégale ou pas. Ce procédé sécurise donc les données en y ajoutant des informations additionnelles qui dénaturent l'information initiale.

On connaît également les brevets d'HyperLOCK Technologies dont le plus pertinent est le document US05937164 qui décrit une solution consistant à séparer le flux en deux parties dont la plus petite détient une information nécessaire à l'utilisation de la plus grande. Cependant, ce brevet n'est pas suffisant pour répondre au problème identifié. En effet, la suppression d'une partie du flux dénature le format du flux, et ne peut donc pas être reconnu comme un flux standard, exploitable avec des applications logicielles générales. Ce procédé de l'art antérieur nécessite à la fois un logiciel spécifique côté serveur, pour la séparation des deux parties, et un autre logiciel spécifique assurant non seulement la reconstruction du flux, mais également l'acquisition du flux principal et son exploitation selon un format propriétaire à la solution. Ce format propriétaire n'est pas le format initial du flux avant séparation en deux parties, dans cette solution connue.

HyperLOCK a également déposé trois autres brevets : le document US5892825 reprend le brevet précédent mais dans un cadre moins large car les flux y sont toujours cryptés ; le document US6035329 repose sur le même principe, il concerne un procédé permettant la lecture d'un disque de type CD-ROM ou DVD-ROM conditionnellement à l'identification des droits par l'insertion d'une carte à puce sur laquelle les informations nécessaires à la lecture sont stockées. Ce procédé n'est encore pas suffisant pour notre problème car il ne garantit pas que le flux modifié soit du même format que le flux originel. Enfin, le document US6185306 concerne un procédé de transmission de données cryptées depuis un site Web vers un ordinateur demandeur. Ce procédé permet cependant à l'utilisateur de disposer à un moment donné de tous les outils nécessaires pour copier les données.

On connaît également des solutions de modification d'un unique flux par permutation de blocs DCT (EP-0633703) ou de matrices de quantification (US-2001/028725). Ces solutions ne sont pas adaptées à la fourniture de deux flux séparés.

Enfin, on connaît le document FR-2789780 (Netquartz) décrivant un procédé conformément au préambule de la revendication 1. Cette solution reste cependant mal adaptée car elle n'est pas exploitable sur des applications logicielles générales mais nécessite une modification de celles-ci. Un objectif de la présente invention est alors de fournir une solution de distribution d'une séquence vidéo sécurisée en plusieurs flux ne nécessitant pas de modification des équipements utilisateurs.

A cet effet, l'invention concerne plus particulièrement un procédé selon la revendication 1.

Avantageusement, ledit format de flux nominal comprend des images comprenant des blocs de coefficients et que lesdites données de configuration du décodage sont des données définissant le mode d'organisation desdits coefficients dans ledit flux nominal pour sa transmission.

Selon un mode de réalisation, ledit format de flux nominal comprend des images comprenant des blocs de coefficients, que les coefficients sont quantifiés selon au moins un pas de quantification et que lesdites données de configuration du décodage sont des données permettant le calcul desdits pas de quantification.

De préférence, ledit format de flux nominal comprend des images comprenant des blocs de coefficients et qu'au moins un desdits coefficients est calculé à partir d'un « prédicteur », déterminé préalablement et d'une « valeur différentielle », contenue dans le flux pour ledit coefficient, et que lesdites données de configuration du décodage sont des données permettant le calcul des valeurs de réinitialisation dudit prédicteur.

Selon un mode de réalisation particulier, une pluralité de paramètres du décodage, définis par lesdites données de configuration du décodage, est modifiée.

De préférence, les modifications apportées aux données de configuration du décodage varient lors de ladite analyse.

Selon un mode de réalisation particulier, ledit format de flux nominal répond à la norme MPEG-2.

L'invention concerne également un système pour la distribution sécurisée de séquences vidéos comprenant un équipement de production d'un flux vidéo, au moins un équipement de recomposition et de visualisation d'un flux vidéo et au moins un réseau de télécommunication entre l'équipement de production et le(s) équipement(s) de recomposition de(s) utilisateur(s).

La présente invention sera mieux comprise à la lecture de la description d'un exemple non limitatif de réalisation qui suit, se référant aux dessins annexés où :
- la figure 1 décrit l'architecture d'ensemble d'un système pour la mise en oeuvre du procédé selon l'invention
- la figure 2 représente un mode de réalisation particulier du système d'analyse et de synthèse de flux de type MPEG conforme à l'invention

Le principe général d'un procédé de sécurisation d'un flux vidéo est exposé ci-après. L'objectif est d'autoriser les services de vidéo à la demande et à la carte à travers tous ces réseaux de diffusion et l'enregistrement local dans le boîtier décodeur numérique de l'usager. La solution consiste à conserver en permanence à l'extérieur de l'habitation de l'usager, en fait dans le réseau de diffusion et de transmission, une partie du programme audiovisuel enregistré, cette partie étant primordiale pour visualiser ledit programme audiovisuel sur un écran de télévision ou de type moniteur, mais étant d'un volume très faible par rapport au volume total du programme audiovisuel numérique enregistré chez l'usager. La partie manquante sera transmise via le réseau de diffusion au moment de la visualisation dudit programme audiovisuel numérique préenregistré chez l'usager.

La plus grande partie du flux audiovisuel sera donc transmise via un réseau de diffusion classique alors que la partie manquante sera envoyée à la demande via un réseau de télécommunication bande étroite comme les réseaux téléphoniques classiques ou les réseaux cellulaires de type GSM, GPRS ou UMTS ou en utilisant une petite partie d'un réseau de type DSL ou BLR, ou encore en utilisant un sous-ensemble de la bande passante partagée sur un réseau câblé.

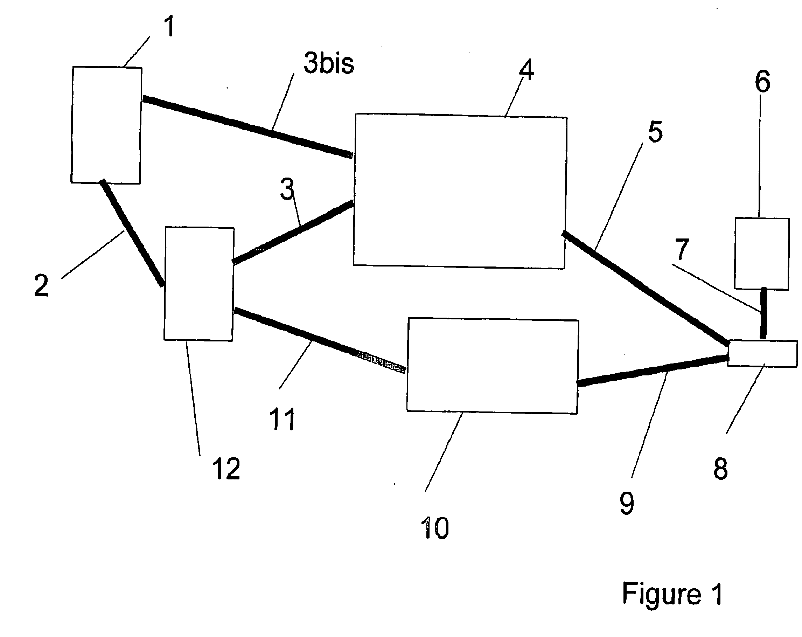

Sur le dessin en annexe, la figure 1 est un schéma de principe d'un système de distribution selon la présente invention.

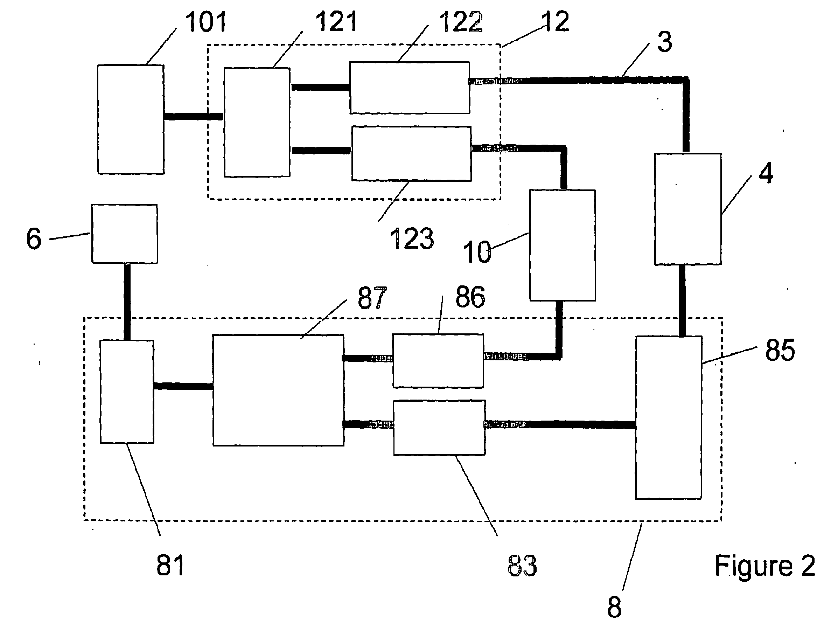

La figure 2 représente un mode de réalisation particulier du système d'analyse et de synthèse de flux conforme à l'invention.

Sur la figure 1, l'agencement d'interfaçage vidéo (8) est adapté pour relier au moins un dispositif d'affichage, par exemple un moniteur, un vidéo projecteur ou un dispositif de type écran de télévision (6), à au moins une interface de réseau de transmission et de diffusion large bande (4) et à au moins une interface de réseau de télécommunication (10). Selon la présente invention, cet agencement est composé d'un module (8) comprenant principalement, d'une part, une unité de traitement adaptée pour traiter, en particulier décoder et désembrouiller tout flux vidéo de type MPEG selon un programme logiciel de décodage et désembrouillage pré-chargé, de manière à l'afficher, en temps réel ou différé, de le stocker, de l'enregistrer et/ou de l'envoyer sur un réseau de télécommunication et, d'autre part, au moins une interface d'écran (7) et une interface de connexion à un réseau local ou étendu (5) et/ou (9). Le réseau de transmission et de diffusion large bande (4) et le réseau de télécommunication (10) pouvant être confondus en un seul réseau.

Le disque dur du module (8) peut être utilisé comme mémoire tampon pour stocker momentanément au moins une partie du programme ou de la séquence vidéo à afficher, en cas de visualisation différée ou de limitation dans la bande passante du réseau de transmission. La visualisation peut être retardée ou différée à la demande de l'utilisateur ou du portail (12).

Comme le montre la figure 1, l'interface de connexion (5) est reliée à un réseau de transmission et de diffusion large bande (4) telle qu'un modem, un modem satellite, un modem câblé, d'une interface de ligne à fibre optique ou d'une interface radio ou infrarouge pour la communication sans-fil.

C'est par cette liaison classique de diffusion vidéo que seront transmis les contenus des programmes audiovisuels comme des films. Toutefois, de façon à ne pas laisser faire de copies pirates, avant de transmettre le contenu audiovisuel depuis le serveur (1) ou le portail (12) le système conserve une petite partie du contenu audiovisuel dans le portail (12).

En cas de visualisation d'un programme audiovisuel en temps réel, cette petite partie du contenu audiovisuel conservée dans le portail (12) sera également envoyée au module (8) via le réseau de télécommunication (10).

La présente invention concerne un flux de type MPEG, c'est-à-dire dont les caractéristiques sont décrites ci-après.

Le format du flux audiovisuel utilisé dans la présente invention a les caractéristiques suivantes :
- Ce format doit décomposer les données en trames [frame], chaque trame comprenant au moins une image numérique I (Intra) complète, qui est codée entierement et ne contient pas d'information sur le mouvement. ;
- Chaque image I se décompose en une succession de blocs pour lesquels un certain nombre d'éléments visuels simples codés numériquement est regroupé (par exemple les composantes Y (luminance), Cb, Cr (chrominances) d'un point d'une image, ou des composantes fréquentielles) ;
- Le flux audiovisuel conforme à ce format comprend des informations non représentées visuellement, qui configurent les paramètres utilisés par le Lecteur adapté à ce type de format de flux lors de son décodage, ces informations non-visuelles permettent par exemple d'organiser les éléments visuels codés numériquement;
- Optionnellement, les éléments visuels sont complètement ou en partie codés de façon différentielle, c'est-à-dire que leur valeur décodée est obtenue à l'aide d'un calcul portant à la fois sur la valeur précisée dans le bloc courant mais aussi sur la dernière valeur de même type décodée, dite « valeur de prédiction » (par exemple celle correspondant au bloc qui précède le bloc courant dans le flux vidéo dans le cas d'une image I et d'un flux MPEG-2).
- Dans un cas particulier, ladite trame comprend également des images numériques dites prédites par rapport aux images précédentes (images P : prédites) ou par rapport aux images précédentes et suivantes (images B : bidirectionnelles). Les images B et P sont constituées de la même façon que les images I mais sont calculées par différence par rapport aux images de référence (compensation de mouvement et différence colorimétrique). Cependant, certains blocs des images P et B peuvent être transmis entièrement (blocs Intra).

Décrivons maintenant le déroulement de la compression d'un flux MPEG. Ce processus s'applique à tout format de flux tel que décrit ci-dessus, le cas de MPEG etant uniquement pris à titre d'exemple non limitatif.

Une compression MPEG commence, dans un premier temps, par décomposer l'image en différentes matrices carrées comportant plusieurs points ou pixels, ayant chacun leur propre valeur colorimétrique. Un calcul permet d'obtenir une valeur moyenne pour chaque matrice au sein de laquelle chaque point est maintenant noyé. Ce traitement génère une pixellisation et l'apparition d'aplats uniformes, là où existaient des nuances de teinte. La deuxième étape de la compression MPEG consiste à ne conserver d'une image à l'autre que les éléments changeants, d'où la création d'images de type B ou P.

La vidéo est représentée comme une succession d'images individuelles, dont chacune est traitée comme une matrice bi dimensionnelle d'éléments d'image (pixels). La représentation des couleurs de chaque pixel comprend trois composantes : une composante de luminance Y et deux composantes de chrominance, Cb et Cr.

La compression de la vidéo numérisée est réalisée par l'utilisation de plusieurs techniques : sous échantillonnage d'informations de chrominance relatif à la sensibilité du système visuel humain (HVS), quantification, compensation du mouvement (MC) pour exploiter la redondance temporelle, transformation dans le domaine fréquentiel par la transformation en cosinus discrète (DCT) pour exploiter la redondance spatiale, codage à longueur variable (VLC) et interpolation d'images.

Le système visuel humain étant le plus sensible à la résolution de la composante de luminance d'une image, les valeurs de pixel Y sont codées à pleine résolution. Le système visuel humain est moins sensible aux informations de chrominance. Le sous-échantillonnage élimine les valeurs de pixels basées systématiquement sur la position, ce qui réduit la quantité d'informations à comprimer par d'autres techniques. La norme conserve un ensemble de pixels de chrominance pour chaque voisinage 2x2 de pixels de luminance.

L'unité de codage de base d'une image est le macrobloc. Les macroblocs de chaque image sont codés successivement, de gauche à droite, et de haut en bas. Chaque macrobloc est composé de 6 blocs 8x8: quatre blocs de luminance Y, un bloc de chrominance Cb et un bloc de chrominance Cr. A noter que les quatre blocs de luminance couvrent la même zone de l'image que chacun des blocs de chrominance, du fait du sous-échantillonnage des informations de chrominance, effectué pour adapter le codage à la sensibilité du système visuel humain.

Pour un macrobloc donné, la première opération est le choix du mode de codage qui dépend du type d'image, de l'efficacité de la prédiction compensée en mouvement dans la région codée, et de la nature du signal contenu dans le bloc. Deuxièmement, une prédiction compensée en mouvement du contenu du bloc, basée sur des images de référence antérieure ou future est formée. Cette prédiction est soustraite des données réelles du macrobloc courant, pour former un signal d'erreur. Troisièmement, ce signal d'erreur est divisé en 6 blocs 8x8 (4 blocs de luminance et 2 blocs de chrominance dans chaque macrobloc) à chacun desquels est appliquée une transformation en cosinus discrète (DCT). Le bloc 8x8 de coefficients DCT résultant est quantifié à l'aide de pas de quantification. Le bloc à deux dimensions qui en résulte est balayé en zigzag pour être converti en une chaîne unidimensionnelle de coefficients DCT quantifiés. Suite à cette transformation, les coefficients situés en haut à gauche du bloc nouvellement obtenu correspondent aux fréquences les plus faibles dans les deux dimensions, alors que ceux obtenus en bas à droite, aux fréquences les plus élevées. Quatrièmement, les informations annexes du macrobloc (type, vecteurs, etc.) ainsi que les données des coefficients quantifiés sont codées. Pour obtenir une efficacité maximale, un certain nombre de tables de codage à longueur variable sont définies pour les différents éléments de données. Un codage des longueurs de plage est appliqué aux données des coefficients quantifiés.

Le coefficient DCT du point (0,0) supérieur gauche du bloc représente une fréquence horizontale et verticale nulle : il est appelé coefficient DC (continu). Le coefficient DC étant proportionnel à la valeur moyenne des pixels du bloc 8x8, le codage différentiel permet une compression supplémentaire, car la différence des valeurs moyennes des blocs 8x8 voisins tend à être relativement petite. Les autres coefficients représentent une ou plusieurs fréquences spatiales horizontales et/ou verticales non nulles et sont appelés coefficients AC.

Le codage différentiel des coefficients DC utilise le fait que les valeurs moyennes des pixels des blocs 8x8 successifs sont proches. Grâce à cette propriété, pour coder un coefficient DC, on ne code que la différence par rapport au dernier coefficient du même type (luminance ou chrominance) codé. Au décodage, la valeur d'un coefficient est calculée à partir de la valeur pour ce coefficient dans le flux vidéo et de la dernière valeur de même type décodée. La dernière valeur décodée de même type est appelée « prédicteur », tandis que la valeur à ajouter au prédicteur pour obtenir la valeur réelle du coefficient quantifié est appelée « coefficient différentiel ». Pour éviter une divergence des valeurs, les prédicteurs sont régulièrement réinitialisés. Le Lecteur remplace la valeur du prédicteur par une valeur prédéterminée, contenue dans le flux, à des instants précis du flux.

La présente invention se rapporte aux informations qui ne représentent pas des données visuelles du flux, mais qui permettent au Lecteur du flux MPEG d'utiliser les informations visuelles selon le processus décrit ci-dessus de façon à reconstituer un flux correct du point de vue de la perception visuelle humaine. Ces informations qui ne représentent pas des données visuelles sont transmises périodiquement dans le flux, selon la norme utilisée pour le format du flux. La modification de ces informations non visuelles entraîne la modification de ladite reconstitution et donc la dégradation du flux de point de vue de la perception visuelle humaine.

Nous décrivons ci-après trois exemples de réalisation de la présente invention dans lesquels les informations modifiées concernent respectivement la quantification des blocs de coefficients DCT, la méthode de balayage des blocs DCT quantifiés en zigzag et les valeurs de réinitialisation des prédicteurs des coefficients DC, en référence aux figures en annexe. Dans la suite, les informations qui ne représentent pas des données visuelles sont appelées « informations de configuration du décodage ».

La présente invention utilise le procédé de sécurisation de flux vidéo décrit ci-dessus. La présente invention consiste donc à modifier tout ou partie des informations de configuration du décodage, les nouvelles valeurs étant conformes aux spécifications de la norme, de manière à modifier l'interprétation faite par le Lecteur vidéo de la suite de données numériques au sein du flux principal modifié ainsi généré, et de mettre de côté dans une information numérique complémentaire, de format quelconque, les informations de configuration du décodage original et/ou les fonctions nécessaires à la reconstitution du flux original à partir du flux principal modifié et de l'information numérique complémentaire. La reconstitution est réalisée lors d'une étape de synthese sur l'équipement destinataire.

Lorsqu'il lit le train binaire, un Lecteur classique MPEG identifie le début d'une image codée, puis le type de l'image. Pour éviter toute confusion entre un boîtier décodeur standard souvent appelé « Set Top Box ou STB », le décodeur standard MPEG sera appelé « Lecteur » (« Player » ou « Viewer ») dans la suite du document. Ce lecteur peut être réalisé en hardware et/ou en software. Le lecteur MPEG décode successivement chaque macrobloc de l'image. L'image est reconstruite quand tous ses macroblocs ont été traités. S'il s'agit d'une image I, elle constitue une image de référence pour les images subséquentes et elle est stockée à la place de l'image de référence la plus ancienne. Les images sont ainsi disponibles, sous forme numérique, pour post-traitement et affichage, au gré de l'application.

Dans le cas d'un programme audiovisuel de type MPEG, toutes les caractéristiques des images en provenance du serveur (1) ou du portail (12) ne sont pas transmises vers le module (8). En particulier, les caractéristiques non transmises conformément à l'invention sont les informations de configuration du décodage contenues dans le flux.

Certaines informations de configuration du décodage sont conservées dans le portail (12). Par contre, en lieu et place des informations de configuration du décodage non transmises, le dispositif conforme à l'invention intercale de fausses informations de configuration du décodage de même nature que les informations de configuration du décodage enlevées et conservées dans le portail (12) de sorte que le Lecteur standard MPEG du module (8) ne soit pas perturbé par ces modifications qu'il ignorera et reconstitue en sortie un flux de sortie MPEG qui sera non correct du point de vue visuel pour un être humain mais correct du point de vue format MPEG.

Comme le montre la figure 1, l'interface de connexion (9) est reliée à un réseau de télécommunication étendu (10), directement ou par un réseau local servant de réseau d'accès et est constitué par exemple d'une interface de ligne d'abonné (Réseau téléphonique analogique ou numérique, DSL, BLR, GSM, GPRS, UMTS, etc).

Ainsi, les programmes audiovisuels sont diffusés de façon classique en mode multi diffusion (« broadcast ») via le réseau de transmission large bande (4) de type hertzien, câble, satellite, numérique hertzien, DSL, etc. depuis le serveur (1) directement via la liaison (3bis) ou via le portail (12) via la liaison (2) et (3) vers le module décodeur (8) à travers la liaison (5). Chaque programme audiovisuel ainsi diffusé peut être brouillé ou non, et, conformément à la présente invention, les flux de type MPEG comportent des modifications comme décrit ci-dessus. En fonction des paramètres choisis par l'usager ou des informations transmises par le serveur de diffusion, certains programmes audiovisuels ainsi modifiés et incomplets sont enregistrés dans le disque dur du boîtier (8).

Lorsque l'usager désire visualiser un programme audiovisuel ainsi enregistré dans le disque dur de son boîtier (8) il en fait la demande de façon classique au moyen d'une télécommande relié à son boîtier (8) qui se connecte alors automatiquement au portail (12) via la liaison (9) de type réseau local ou accès direct et à travers le réseau de télécommunication (10) lui-même relié au portail (12) via la liaison (11). Tout au long de la visualisation du programme audiovisuel, les liaisons (9) et (11) restent établies et permettent au boîtier (8) de recevoir les fonctions et les paramètres de remise en ordre des informations de configuration du décodage modifié. Les informations de configuration du décodage ainsi transmises ne sont jamais enregistrées dans le disque dur du boîtier (8) car les images reconstituées avec ces nouvelles valeurs sont directement affichées sur l'écran de visualisation (6) via la liaison (7) après avoir été traitées par le Lecteur du boîtier (8) à partir de sa mémoire locale volatile. Une fois traitées et visualisées, les informations de configuration du décodage modifiées et/ou manquantes venant d'être transmises par le portail (12) sont effacées de la mémoire volatile locale du boîtier (8).

Dans un premier exemple de réalisation, la présente invention consiste à modifier la méthode de balayage des blocs DCT quantifiés. Décrivons le processus déterminant l'organisation des coefficients dans MPEG. Une fois qu'un bloc de coefficients DCT quantifiés est calculé, les informations numériques correspondant à ce bloc sont ordonnées dans le fichier correspondant au flux. Plusieurs méthodes d'organisation peuvent être utilisées : ils peuvent être ordonnés ligne par ligne, en zigzag en partant du coefficient en haut à gauche, dans un ordre aléatoire. L'ordre des coefficients DCT quantifiés dans un bloc est spécifié par l'inclusion dans le flux d'une information numérique apte à être interprétée par le Lecteur. Dans le cas de MPEG, deux types de balayage du bloc sont possibles et définis. Ces deux types de balayages sont connus par le Lecteur. Le choix du type de balayage utilisé pour un bloc est déterminé par un bit inclus dans le flux, appelé « bit de balayage » (son nom dans la norme MPEG-2 est « alternate_scan »). Pour savoir quel type de balayage a été appliqué aux coefficients DCT du bloc, le Lecteur lit le bit correspondant et en fonction de la valeur de ce bit, reconstitue le bloc de coefficients DCT quantifiés à partir de la suite de coefficients du flux. Il est convenu que ce calcul est réalisé en même temps que d'autres calculs du Lecteur opérés sur le flux. La valeur du bit de balayage est transmise périodiquement dans le flux et stockée par le décodeur. Ainsi, le bit de balayage peut être transmis à chaque image, à chaque groupe d'images, ou une seule fois pour tout le flux. Tant que la valeur du bit n'est pas modifiée, le Lecteur utilise la dernière valeur de bit de balayage transmise pour déterminer quel type de balayage effectuer sur le bloc en cours de décodage. Dans MPEG-2, le bit de balayage est transmis à chaque nouvelle image, quel que soit son type (I, B ou P), dans le champ appelé « picture coding extension » par la norme.

L'exemple présenté concerne MPEG-2 sans que cela limite la portée de l'invention. En effet, l'invention se rapporte également à tout type de format utilisant une information non représentée visuellement pour définir le type de balayage (qui peut être d'une autre forme qu'un bit) et transmise périodiquement (toutes les images, une seule fois pour tout le flux ou tous les blocs).

La présente invention propose donc de modifier le flux original en inversant, de temps à autre, la valeur du bit définissant le type de balayage. Pour cela, la présente invention utilise le procédé de sécurisation de flux vidéo décrit ci-dessus. La présente invention sera mieux comprise grâce à la description suivante en référence à la figure 2 du dessin en annexe.

Dans cet exemple de réalisation, le portail (121) a déterminé le flux MPEG (101) qu'il doit envoyer à l'utilisateur (8) pour être regardé en différé sur son écran de télévision (6). Cet utilisateur est relié à un réseau câblé numérique de diffusion (4) et à un réseau de télécommunication (10).

Le système d'analyse (121) du portail (12) lit donc le flux entrant MPEG (101) et, chaque fois qu'il détecte une image, il identifie dans le code le bit donnant le type de balayage à appliquer aux blocs de l'image (« bit de balayage »). Selon une loi aléatoire, le dispositif d'analyse (121) décide d'inverser le bit de balayage pour l'image en cours de traitement. Si le bit de balayage d'une image est modifié, le dispositif d'analyse (121) stocke dans l'information numérique complémentaire la référence de ladite image. Une fois toutes les images du flux analysées, l'information numérique complémentaire, stockée dans le tampon de sortie (123), contient donc les références de toutes les images pour lesquelles le bit de balayage a été inversé. L'information numérique complémentaire permettra plus tard la reconstitution de la séquence de départ dans le boîtier (8), par une nouvelle inversion du bit de balayage pour les images référencées dans l'information numérique complémentaire.

D'autre part, le flux MPEG principal modifié par le changement de la valeur du bit de balayage pour certaines images est enregistré dans le tampon de sortie (122) pour être diffusé sur le réseau de diffusion (4) à travers la liaison (3) vers un ou plusieurs utilisateurs (8).

Chaque boîtier décodeur autorisé (8) qui souhaite enregistrer ce flux MPEG ainsi modifié peut alors lire ce flux MPEG et l'enregistrer sur son disque dur (85). Cette initiative d'enregistrement est laissée au décodeur (8) sous le contrôle du portail (12). Pour cela, le système d'analyse (121) avait inscrit au début du flux MPEG, une information de données supplémentaires qui précisait les destinataires de ce flux MPEG modifié. Les destinataires peuvent être ainsi un destinataire (8) particulier et lui seul, un groupe de destinataires (8) ou l'ensemble des décodeurs (8) reliés au réseau (4).

La phase décrite ci-dessus correspond à la première phase de préparation du flux MPEG par le portail (12), à sa transmission via le réseau large bande (4) et à son enregistrement dans un décodeur (8). Ce décodeur peut alors afficher ce flux MPEG enregistré dans son disque dur (85). Pour cela, le système de synthèse (87) du décodeur (8) lit le fichier MPEG depuis son disque dur (85) et l'envoie vers un lecteur classique MPEG (81). Si aucune donnée complémentaire n'est reçue par le système de synthèse (87), alors le flux MPEG qui parvient au Lecteur (81) est traité et affiché tel quel, ce qui provoque une distorsion importante de l'affichage sur l'écran de visualisation (6). En effet, les images contenues dans le flux modifié qui sont traitées par le système de synthèse (87) ne correspondent pas aux images qui sont nécessaires pour une visualisation correcte, puisque les blocs de certaines images sont reconstruits selon un type de balayage différent de celui du flux original. Par contre, comme le flux enregistré est bien un flux de type MPEG et conforme à ce standard, le lecteur (81) ne fait aucune différence et affiche les informations sur l'écran de sortie (6) qui apparaissent bien comme des données d'un flux vidéo MPEG mais totalement incohérentes à l'être humain qui regarde l'écran (6). Toute copie du flux MPEG en provenance du disque dur (85) du boîtier (8) produira le même effet visuel lors de sa restitution par un lecteur MPEG quelconque ; toute utilisation de cette copie qui serait mal intentionnée est donc vouée à l'échec.

Lorsque l'usager du décodeur (8) veut réellement visualiser sur son écran (6) le programme audiovisuel enregistré sur son disque dur (85), il en fait la demande au système de synthèse (87) avec sa télécommande comme il le ferait avec un magnétoscope ou un lecteur de DVD présentant un menu sur son écran de télévision. Le système de synthèse (87) fait alors une requête au disque dur (85) et commence à analyser le flux MPEG modifié en provenance du disque dur (85) via le tampon de lecture (83). Le système de synthèse (87) établit alors une liaison avec le portail (12) via le réseau de télécommunication (10) qui est dans notre exemple une liaison DSL. Une fois cette liaison établie, et pendant toute la durée de visualisation du film ou du programme audiovisuel, le système de synthèse (87) fait parvenir de la mémoire tampon (123) du serveur (12) les références des images modifiées du flux enregistré sur le disque dur (85). Ces références parviennent au système de synthèse (87) via la mémoire tampon d'entrée (86) et sont stockées temporairement dans la mémoire volatile (88) du système de synthèse (87). Lorsque le système de synthèse (87) lit une image à partir du disque dur (85) et que cette image est référencée dans l'information complémentaire contenue dans la mémoire volatile (88), il inverse la valeur du bit de balayage pour cette image. Le flux ainsi reconstitué est envoyé vers le lecteur (81) pour être affiché correctement sur l'écran (6). Dès leur utilisation, les références des images modifiées sont effacées de la mémoire volatile (88).

Dans le cas où l'usager regarde le contenu visuel du flux principal modifié, le résultat qu'il obtient présente un très fort effet de pixellisation : tous les détails sont perdus étant donné que la reconstruction de tous les coefficients AC de l'image est erronée.

Selon un deuxième exemple de réalisation, la présente invention modifie les paramètres de quantification des blocs de coefficient DCT.

Le format MPEG utilise des propriétés des coefficients DCT pour optimiser la compression du flux vidéo. Après, le dispositif de codage applique une transformation en cosinus discret (DCT) des blocs pour former des blocs de coefficients DCT, de même taille que les blocs originaux. Puis le dispositif de compression utilise une matrice de quantification stockée dans une mémoire reliée audit dispositif de compression. La matrice de quantification est de même taille que le bloc à quantifier et est composée de coefficients appelés « pas de quantification ». Chaque coefficient DCT est divisé par le pas de quantification correspondant pour former un coefficient DCT quantifié (seule la partie entière du résultat de la division est conservée). Par exemple, si le coefficient DCT a une valeur de 35 et le pas de quantification de 16, le coefficient DCT quantifié aura une valeur de 2. De même si les valeurs sont respectivement 7 et 14, le résultat sera 0. Dans le format MPEG-2, les pas de quantification en bas à droite (donc correspondant aux coefficients de haute fréquence du bloc DCT) sont élevés afin de générer un grand nombre de 0 consécutifs lors du balayage du bloc. Une grande suite de 0 permet en effet de réduire la place prise par le codage de ces coefficients (codage RLC « Run Level Coding » bien connu de l'homme de l'art).

Les pas de quantification sont transmis périodiquement dans le flux vidéo et utilisés par le Lecteur vidéo pour recalculer des estimations des coefficients DCT originaux non quantifiés et donc du bloc de pixels original. Dans le cas de MPEG-2, les pas de quantification contenus dans la matrice de quantification peuvent être modifiés par la variable « Quantiser_scale_code ». L'intérêt de cette variable est de pouvoir adapter localement les pas de quantification pour une zone de l'image, sans avoir à retransmettre une matrice de quantification complète. Comme pour le bit de balayage, chaque fois qu'un pas de quantification est transmis dans le flux, il est utilisé par le Lecteur pour déquantifier les blocs DCT jusqu'à sa substitution par un autre pas de quantification transmis ultérieurement ou réinitialisé. Dans MPEG-2, les pas de quantification sont transmis avec différents éléments du flux : dans un champ « quant matrix extension » en ce qui concerne la matrice complète, dans un champ « slice » ou « macroblock » pour « quantiser_scale_code ».

L'invention concerne donc les informations de configuration du décodage déterminant les pas de quantification à utiliser. Ce deuxième exemple de réalisation suit le même procédé que le premier exemple de réalisation décrit ci-dessus. La différence entre ces deux exemples de réalisation est le type des modifications appliquées au flux original et donc le contenu de l'information numérique complémentaire envoyée en temps réel par le serveur (12) vers le client (8).

Ainsi, dans ce deuxième exemple de réalisation, le système d'analyse (121) du portail (12) lit donc le flux entrant MPEG (101) et identifie dans le code les données numériques permettant au Lecteur de calculer les pas de quantification. Pour chaque ensemble de données correspondant à des pas de quantification, le dispositif d'analyse (121) décide de modifier ou non lesdites données et s'il décide de les modifier, il les remplace par des valeurs choisies aléatoirement mais conformes au format du flux. Dans ce cas, le dispositif d'analyse (121) stocke dans l'information numérique complémentaire la référence de l'ensemble de données modifié dans le flux et les valeurs originales des pas de quantification, qui ont été substituées. Une fois tout le flux analysé, l'information numérique complémentaire, stockée dans le tampon de sortie (123), contient les références dans le flux de toutes les données modifiées et les valeurs originales de ces données. L'information numérique complémentaire permettra plus tard la reconstitution de la séquence de départ dans le boîtier (8), en réalisant un remplacement des valeurs aléatoires des pas de quantification modifiés par les valeurs originales contenues dans l'information numérique complémentaire.

De même que pour le premier exemple de réalisation, l'utilisateur (8) peut décider de regarder le flux principal modifié stocké sur son disque dur sans se connecter au serveur (12). Dans ce cas, comme les modifications apportées au flux ne modifient pas le format de ce flux, il sera affiché sans problème sur l'écran de visualisation (6) mais ne sera pas correct du point de vue de la perception visuelle humaine car certains blocs auront été reconstruits selon une mauvaise matrice de quantification.

Si l'utilisateur (8) veut réellement regarder le flux vidéo originel, il se connecte au serveur (12) et le dispositif de synthèse (87) va reconstruire le flux original à partir du flux principal modifié et des valeurs réelles des pas de quantification contenus dans l'information numérique complémentaire.

Dans le cas où l'usager regarde le contenu visuel du flux principal modifié, le résultat qu'il obtient présente un très fort bruit de quantification : les détails constituant l'image sont fortement exagérés ou disparaissent complètement suivant la modification apportée aux blocs correspondants.

Selon un troisième exemple de réalisation, la présente invention modifie les valeurs de réinitialisation des prédicteurs utilisés pour le décodage des coefficients DC.

Il a été présenté ci-dessus que lors du décodage d'un flux MPEG, les coefficients DC des blocs Intra sont calculés à partir d'un « prédicteur » enregistré par le Lecteur et correspondant au dernier coefficient DC décodé et à partir de la valeur transmise dans le flux pour la partie différentielle de ce coefficient DC (le « coefficient différentiel »), qui est ajoutée au prédiçteur. Pour éviter une divergence du prédicteur, celui-ci est réinitialisé régulièrement par le Lecteur quand le Lecteur lit dans le flux la variable de réinitialisation.

Dans MPEG-2, la variable de réinitialisation du prédicteur des coefficients DC est calculée directement à partir du champ numérique appelé « Intra-DC_precision » qui est envoyé avec chaque image dans le champ appelé « picture coding extension ». La valeur de réinitialisation est utilisée par le Lecteur pour les blocs Intra, c'est-à-dire les blocs transmis entièrement et non calculés à partir de blocs des images précédentes ou suivantes par prédiction de mouvement comme la norme MPEG-2 l'autorise. Par exemple, une image I est composée uniquement de blocs Intra, mais il peut y en avoir aussi dans une image B ou P. Dans le cas de MPEG-2, la valeur de réinitialisation est notamment utilisée à chaque début de « slice » (une « slice », ou tranche, est une structure de l'image correspondant à une rangée complète de macroblocs), et chaque fois qu'un bloc non Intra est décodé.

Une variante de cet exemple de réalisation est réalisée avec un flux dont le format comprend des moyens de réinitialisation du prédicteur autre qu'une variable transmise avec chaque image. Ces moyens sont ainsi transmis à des intervalles différents : une fois pour l'ensemble du flux, une fois par « slice » par exemple.

L'invention concerne donc les informations de configuration du décodage déterminant les valeurs de réinitialisation des prédicteurs des coefficients DC à utiliser dans les blocs Intra. Ce troisième exemple de réalisation suit le même procédé que le premier exemple de réalisation décrit ci-dessus. La différence entre ces exemples de réalisation est le type des modifications appliquées au flux original et donc le contenu de l'information numérique complémentaire envoyée en temps réel par le serveur (12) vers le client (8).

Ainsi, dans ce troisième exemple de réalisation, le système d'analyse (121) du portail (12) lit donc le flux entrant MPEG (101) et, chaque fois qu'il détecte une image, il identifie dans le code les données permettant le calcul de la valeur de réinitialisation des prédicteurs des coefficients DC à appliquer lors du décodage de l'image. Selon une loi aléatoire, le dispositif d'analyse (121) décide de modifier la valeur de réinitialisation des coefficients DC de l'image en la remplaçant par une valeur choisie aléatoirement, mais conforme au format du flux original. Si la valeur de réinitialisation des coefficients DC d'une image est modifiée, le dispositif d'analyse (121) stocke dans l'information numérique complémentaire la référence de ladite image et la valeur de réinitialisation des coefficients DC originale. Une fois toutes les images du flux analysées, l'information numérique complémentaire, stockée dans le tampon de sortie (123), contient donc les références de toutes les images modifiées et la valeur de réinitialisation originale. L'information numérique complémentaire permettra plus tard la reconstitution de la séquence de départ dans le boîtier (8), en remplaçant les valeurs de réinitialisation modifiées par les valeurs originales contenues dans l'information numérique complémentaire.

De même que pour le premier exemple de réalisation, l'utilisateur (8) peut décider de regarder le flux principal modifié stocké sur son disque dur sans se connecter au serveur (12). Dans ce cas, comme les modifications apportées au flux ne modifient pas le format de ce flux, il sera affiché sans problème sur l'écran de visualisation (6) mais ne sera pas correct du point de vue de la perception visuelle humaine car certains blocs auront été reconstruits avec un mauvais prédicteur pour le coefficient DC.

Si l'utilisateur (8) veut réellement regarder le film, il se connecte au serveur (12) et le dispositif de synthèse (87) peut reconstruire le flux original à partir du flux principal modifié et des valeurs de réinitialisation originales contenues dans l'information numérique complémentaire.

Dans le cas où l'usager regarde le contenu visuel du flux principal modifié, le résultat qu'il obtient présente d'importants défauts : régulièrement, le niveau moyen de luminosité et de chrominance de l'image change complètement et de façon aléatoire et de nombreux artefacts sont visibles.

L'invention est présentée ci-dessus dans le cas particulier de MPEG, mais peut être appliquée à tout flux dont le format respecte les conditions telles que décrites plus haut. De même, les exemples de réalisation ne constituent pas une limite à la portée de l'invention, qui s'applique à tout autre information de configuration du décodage transmise dans le flux.

## Revendications

1. Procédé pour la distribution sécurisée de séquences vidéo originelles (101), codées selon un format de flux nominal constitué de données visuelles et de données de configuration du décodage du flux qui ne représentent pas des données visuelles, le procédé consistant, avant la transmission à un équipement destinataire (8), à une analyse du flux par un serveur (12) pour générer un flux principal modifié et une information numérique complémentaire d'un format quelconque, puis à transmettre ledit flux principal modifié et ladite information numérique complémentaire ainsi générés depuis le serveur (12) vers l'équipement destinataire (8), et à calculer sur l'équipement destinataire (8) une synthèse d'un flux au format nominal en fonction dudit flux principal modifié et de ladite information complémentaire, ledit flux principal modifié présente le format du flux nominal et présente des images modifiées par la modification desdites données de configuration du décodage et, de façon à permettre la reconstruction desdites séquences vidéo originelles (101), ladite information numérique complémentaire d'un format quelconque comporte: soit des références dans le flux de toutes les images pour lesquelles lesdites données de configuration du décodage ont été modifiées, soit lesdites données de configuration du décodage originales et des références dans le flux de toutes les données modifiées, **caractérisé en ce que** ledit flux principal modifié et ladite information numérique complémentaire sont transmis séparément l'un de l'autre depuis le serveur (12) vers l'équipement destinataire (8), de manière à ce que le flux principal modifié soit enregistré préalablement à la transmission de ladite partie complémentaire dans l'équipement destinataire (8) et, lorsque lesdites séquences vidéo originelles doivent être visualisées, ladite information numérique complémentaire est envoyée en temps réel par le serveur (12) vers l'équipement destinataire (8), à la demande de ce dernier, pour être stockées temporairement dans une mémoire volatile (88) locale de l'équipement destinataire (8), une fois lesdites séquences vidéo reconstruites visualisées, l'information numérique complémentaire est effacée de ladite mémoire volatile (88).

2. Procédé pour la distribution sécurisée de séquences vidéo selon l'une des revendications précédentes, **caractérisé en ce que** ledit format de flux nominal comprend des images comprenant des blocs de coefficients et que lesdites données de configuration du décodage sont des données définissant le mode d'organisation desdits coefficients dans ledit flux nominal pour sa transmission.

3. Procédé pour la distribution sécurisée de séquences vidéo selon l'une des revendications précédentes, **caractérisé en ce que** ledit format de flux nominal comprend des images comprenant des blocs de coefficients, que les coefficients sont quantifiés selon au moins un pas de quantification et que lesdites données de configuration du décodage sont des données permettant le calcul dudit au moins un pas de quantification.

4. Procédé pour la distribution sécurisée de séquences vidéo selon l'une des revendications précédentes, **caractérisé en ce que** ledit format de flux nominal comprend des images comprenant des blocs de coefficients et qu'au moins un desdits coefficients est calculé à partir d'un « prédicteur », déterminé préalablement et d'une « valeur différentielle », contenue dans le flux pour ledit coefficient, et que lesdites données de configuration du décodage sont des données permettant le calcul des valeurs de réinitialisation dudit prédicteur.

5. Procédé pour la distribution sécurisée de séquences vidéo selon au moins une des revendications précédentes, **caractérisé en ce qu'**une pluralité de paramètres du décodage définis par lesdites données de configuration du décodage est modifiée.

6. Procédé pour la distribution sécurisée de séquences vidéo selon au moins une des revendications précédentes, **caractérisé en ce que** les modifications apportées aux données de configuration du décodage varient lors de ladite analyse.

7. Procédé pour la distribution sécurisée de séquences vidéo selon au moins une des revendications précédentes, **caractérisé en ce que** ledit format de flux nominal répond à la norme MPEG-2.

8. Système pour la distribution sécurisée de séquences vidéo comprenant un équipement (1,12) de production et distribution d'un flux vidéo selon l'une quelconque des revendications de 1 à 7, au moins un équipement (6,7,8) de recomposition et de visualisation d'un flux vidéo et au moins un réseau de télécommunication (4,10) entre l'équipement (1,12) de production et distribution et le(s) équipement (s) (6,7,8)de recomposition de(s) utilisateur(s).

## Patentansprüche

1. Verfahren zur gesicherten Übertragung von originalen Videosequenzen (101), verschlüsselt in einem üblichen kontinuierlichen Übertragungsformat bestehend aus visuellen Daten und Konfigurationsdaten zur Entschlüsselung des Stromes, die keine visuelle Daten darstellen, wobei das Verfahren aus einer, vor der Übertragung an eine Empfängereinrichtung (8), Analyse des Stroms durch einen Server (12) besteht, um einen veränderten Hauptstrom zu erzeugen und eine komplementäre digitale Information in einem beliebigen Format, dann den veränderten Hauptstrom und die komplementäre digitale Information, die so erzeugt wurden, vom Server (12) an die Empfängereinrichtung (8) zu übertragen, und in der Empfängereinrichtung (8) eine Synthese eines Stroms im Nennformat in Abhängigkeit von dem veränderten Hauptstrom und von der Zusatzinformation zu berechnen, wobei der veränderte Hauptstrom das Format des Nennstroms und veränderte Bilder aufweist infolge der Veränderung der besagten Konfigurationsdaten zur Entschlüsselung, und, um die Rekonstruktion der besagten originale Videosequenzen (101) zu gestatten, umfasst die komplementäre digitale Information in einem beliebigen Format: entweder Bezüge in dem Strom aller Bilder, für die die Konfigurationsdaten zur Entschlüsselung verändert wurden, oder die originalen Konfigurationsdaten zur Entschlüsselung und Bezüge in dem Strom aller veränderter Daten,
**gekennzeichnet dadurch, dass** der veränderte Hauptstrom und die komplementäre digitale Information voneinander getrennt vom Server (12) an die Empfängereinrichtung (8) übertragen werden, damit der veränderte Hauptstrom vor der Übertragung des komplementären Teils an die Empfängereinrichtung (8) aufgezeichnet wird und, wenn besagte originale Videosequenzen visualisiert werden sollen, wird die komplementäre digitale Information in Echtzeit vom Server (12) an die Empfängereinrichtung (8) geschickt, auf Anfrage von letzterer, um vorübergehend in einem flüchtigen lokalen Speicher (88) der Empfängereinrichtung (8) gespeichert zu werden, wenn die rekonstruierten Videosequenzen visualisiert worden sind, wird die digitale komplementäre Information von besagtem flüchtigen Speicher (88) gelöscht.

2. Verfahren zur gesicherten Übertragung von Videosequenzen nach einem der vorhergehenden Ansprüche, **gekennzeichnet dadurch, dass** das übliche kontinuierliche Übertragungsformat Bilder mit Koeffizientenblöcken umfasst und dass die Konfigurationsdaten zur Entschlüsselung Daten sind, die die Organisationsart der genannten Koeffizienten in der üblichen kontinuierlichen Übertragung für ihre Übertragung definieren.

3. Verfahren zur gesicherten Übertragung von Videosequenzen nach einem der vorhergehenden Ansprüche, **gekennzeichnet dadurch, dass** das übliche kontinuierliche Übertragungsformat Bilder mit Koeffizientenblöcken umfasst, dass die Koeffizienten nach mindestens einem Quantifizierungsschritt quantifiziert werden und dass besagte Konfigurationsdaten zur Entschlüsselung Daten sind, durch die die Berechnung des genannten mindestens einen Quantifizierungsschritts möglich wird.

4. Verfahren zur gesicherten Übertragung von Videosequenzen nach einem der vorhergehenden Ansprüche, **gekennzeichnet dadurch, dass** das übliche kontinuierliche Übertragungsformat Bilder mit Koeffizientenblöcken umfasst und dass mindestens einer der genannten Koeffizienten ausgehend von einem Prädiktor berechnet wird, vorherbestimmt und von einem Differenzwert, der in der Übertragung für besagten Koeffizienten enthalten ist, und dass besagte Konfigurationsdaten zur Entschlüsselung Daten sind, durch die die Berechnung der Reinitialisierungswerte des genannten Prädiktors möglich wird.

5. Verfahren zur gesicherten Übertragung von Videosequenzen nach mindestens einem der vorherigen Ansprüche, **gekennzeichnet dadurch, dass** ein Vielzahl von Parametern der Entschlüsselung, die von besagten Konfigurationsdaten der Entschlüsselung definiert werden, verändert wird.

6. Verfahren zur gesicherten Übertragung von Videosequenzen nach mindestens einem der vorherigen Ansprüche, **gekennzeichnet dadurch dass** die Veränderungen der Konfigurationsdaten der Entschlüsselung während der Analyse variieren.

7. Verfahren zur gesicherten Übertragung von Videosequenzen nach mindestens einem der vorherigen Ansprüche, **gekennzeichnet dadurch, dass** besagtes übliche kontinuierliche Übertragungsformat der Norm MPEG-2 entspricht.

8. System zur gesicherten Übertragung von Videosequenzen mit einer Einrichtung (1, 12) zur Herstellung und Verbreitung einer Videoübertragung nach einem beliebigen der Patentansprüche 1 bis 7, mindestens einer Einrichtung (6,7, 8) zur Wiederherstellung und Wiedergabe einer Videoübertragung und mindestens einem Telekommunikationsnetzwerk (4, 10) zwischen der Einrichtung (1, 12) zur Herstellung und Verbreitung und der (den) Einrichtung(en) (6, 7, 8) zur Wiederherstellung des (der) Benutzer(s).

## Claims

1. A process for secure distribution of original video sequences (101) coded in accordance with a nominal stream format comprising visual data and data for configuration of decoding of the stream that does not represent the visual data, the process consisting in, prior to transmission to a client equipment (8), a stream analysis is made by a server (12) of the stream for generating a modified main stream and complementary digital information of any format, then, for transmitting the modified main stream and said complementary digital information generated from the server (12) to the client equipment (8), and wherein a synthesis of a stream in the nominal format is calculated on the client equipment (8) as a function of the said modified main stream and the complementary information, said modified main stream has a format of the nominal stream and having pictures/images modified by modification of the data for configuration the decoding, and in order to reconstruct said original video sequences (101), said complementary digital information of any format comprises : either references in the stream of all images for which said data for configuration the decoding have been modified, or said original decoding configuration data and references in the stream of all modified data, **characterised in that** said modified main stream and said complementary information are transmitted separately from each other from the server (12) toward the client equipment (8), so that the modified main stream is recorded previously to the transmission of said part of the complementary information in the client equipment (8) and, when the original video sequences are visualised, said complementary digital information is sent in real time by the server (12) toward the client equipment (8), on request of the latter, to be temporary stored in a local volatile memory (88) of the client equipment (8), and once said reconstructed video sequences are visualised, the complementary digital information is deleted from the volatile memory (88).

2. The process for secure distribution of video sequences according to one of the preceding claim, **characterized in that**, said nominal stream format comprises pictures comprising blocks of coefficients and said data for configuration of the decoding is data defining a mode of organization of coefficients in the nominal stream for its transmission.

3. The process for secure distribution of video sequences according to one of the preceding claim, **characterized in that** said nominal stream format comprises pictures comprising blocks of coefficients, the coefficients are quantified according to at least one quantification step and the data for configuration of the decoding is data permitting calculation of said at least one quantification step.

4. The process for secure distribution of video sequences according to one of the preceding claim, **characterized in that** said nominal stream format comprises pictures comprising blocks of coefficients, that at least one of the coefficients is calculated from a previously determined "predictor", and from a "differential value" contained in the stream for the coefficient, and said decoding configuration data is data permitting calculation of re-initialization values of the predictor.

5. The process for secure distribution of video sequences according to at least one of the preceding claim, **characterized in that** a plurality of decoding parameters defined by the decoding configuration data is modified.

6. The process for secure distribution of video sequences according to at least one of the preceding claim, **characterized in that**, the modifications made to the decoding configuration data vary during said analysis.

7. The process for secure distribution of video sequences according to at least one of the preceding claim, **characterized in that**, the nominal stream format is based on a MPEG-2 norm.

8. A system for secure distribution of video sequences comprising an apparatus (1, 12) for the production of a video stream according any one of the claims 1 to 7, at least one device (6, 7, 8) for re-composition and viewing of a video stream and at least one telecommunication network between the production apparatus (1, 12) and the device of re-composition user's equipment (6, 7, 8).
